# EUROPEAN PATENT APPLICATION

(11) **EP 2 040 351 A2**
(43) Date of publication of application: **25.03.2009**
(21) Application number: 08150750.1
(22) Date of filing: 29.01.2008
(51) Int. Cl.: H02K 1/14, H02K 15/02

(54) **An armature for an electric d.c. machine, in particular a stator for a d.c. brushless motor, and a method for the manufacture thereof**

(30) Priority: 12.09.2007 IT TO20070642
(71) Applicant: GATE S.r.l., 10123 Torino (IT)
(72) Inventor: Origlia, Aulo, 14100 Asti (IT); Losurdo, Marco, 10098 Rivoli (Torino) (IT)
(74) Representative: Quinterno, Giuseppe

(57) **Abstract**

The armature (1) comprises
a ferromagnetic structure (2) made of stacked laminations (10) and including an annular portion (3) and a plurality of radial teeth (4) between which a corresponding plurality of slots (5) is defined, each tooth (4) carrying a respective winding (6).

The ferromagnetic structure (2) is formed of a plurality of separate tooth members (4), each comprising a respective stack (12) of laminations (10) and having a root portion (12a), an intermediate shank portion (12b) carrying the respective winding (6), and a distal head portion (12c).

The tooth members (4) arc mechanically interconnected and magnetically coupled with each other through respective mating formations (12f, 12g) of their root portions (12a), whereby the interconnected root portions (12a) of the tooth members (4) form the said annular portion (3) of the ferromagnetic structure (2).

## Description

The present invention relates to an armature for an electric d.c. machine, in particular a stator for a d.c. brushless motor.

More specifically, the invention relates to an armature of the kind comprising a ferromagnetic structure made of stacked laminations and including an annular portion and a plurality of angularly spaced, essentially radial teeth which project from said annular portion, whereby a corresponding plurality of slots is defined therebetween, each tooth carrying a respective winding.

According to the prior art, the laminations of the above-mentioned ferromagnetic structure of such an armature are punched from sheets of a ferromagnetic material. Each lamination is shaped in such a way that the said annular portion of the ferromagnetic structure and the radial teeth projecting therefrom are formed integrally in one piece.

In other words, the said ferromagnetic structure of an armature according to the prior art is basically formed of one single stack of laminations. With such laminations the punching efficiency is rather low since the cut-out material which remains non-utilized may amount to about 60-70% of the whole sheet used.

Furthermore, with such armatures forming a respective winding on each tooth requires using sophisticated and expensive winding machines.

An object of the present invention is to provide an improved armature for an electric d.c. machine, in particular a stator for a d.c. brushless motor, as well as a method for the manufacture thereof, which allow to overcome the above-outlined inconveniences of the prior art.

This and other objects are achieved according to the invention by an armature having the features defined in claim 1, and the method of manufacture according to claim 7.

Further features and advantages of the invention will become apparent from the detailed description which follows, provided purely by way of a non-limiting example, with reference to the accompanying drawings, in which:
figure 1 a perspective view of a stator for a d.c. brushless motor according to the present invention;
figure 2 is a perspective view of a lamination of a tooth member in an armature according to the present invention;
figure 3 is a diagrammatical representation showing a way of punching laminations according to figure 2 from a sheet of ferromagnetic material;
figure 4 is a perspective view of the stack of laminations of a tooth member of an armature according to the present invention;
figures 5 and 6 are perspective views of tooth members for an armature according to the present invention, before and after being provided with a respective winding;
figure 7 is a top-plan view of the tooth member of figure 6;
figure 8 is a top-plan view of an armature according to the present invention;
figure 9 is a side view of the armature shown in figure 6;
figure 10 is an enlarged view of a portion encircled and indicated X in figure 8;
figure 11 is a partial top plan view of another armature according to the invention.

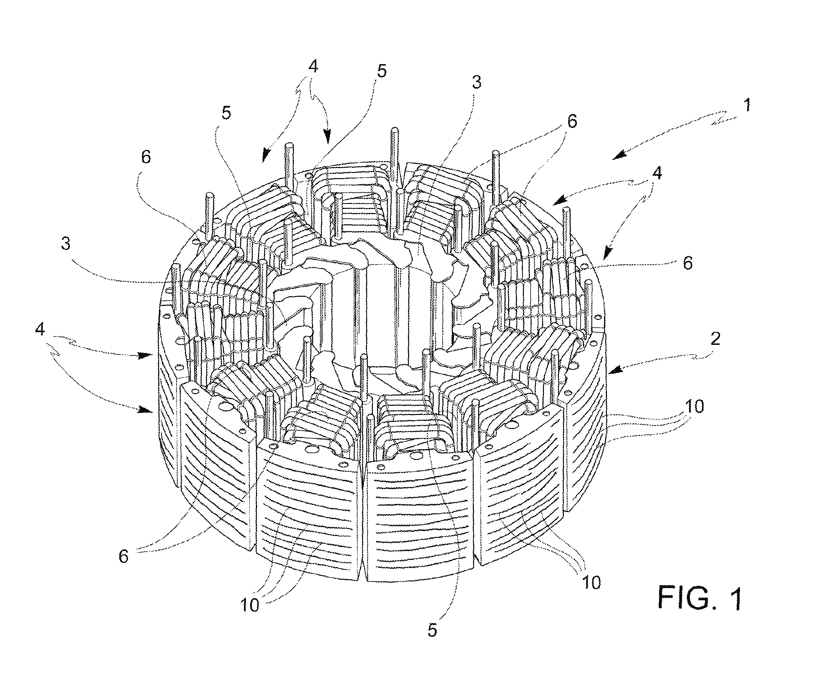

Referring to the embodiment illustrated in figure 1, an armature for an electric d.c. machine, in particular a stator for a d.c. brushless motor is generally indicated by the reference numeral 1.

The stator 1 is intended for cooperation with a rotor (not-shown) extending radially around it ("external" rotor).

The stator 1 comprises a ferromagnetic structure 2, which is made of stacked laminations, and which includes a radially inner annular portion 3 and a plurality of angularly spaced, essentially radial teeth 4, which project outwardly from said annular portion 3, whereby a corresponding plurality of slots 5 is defined therebetween.

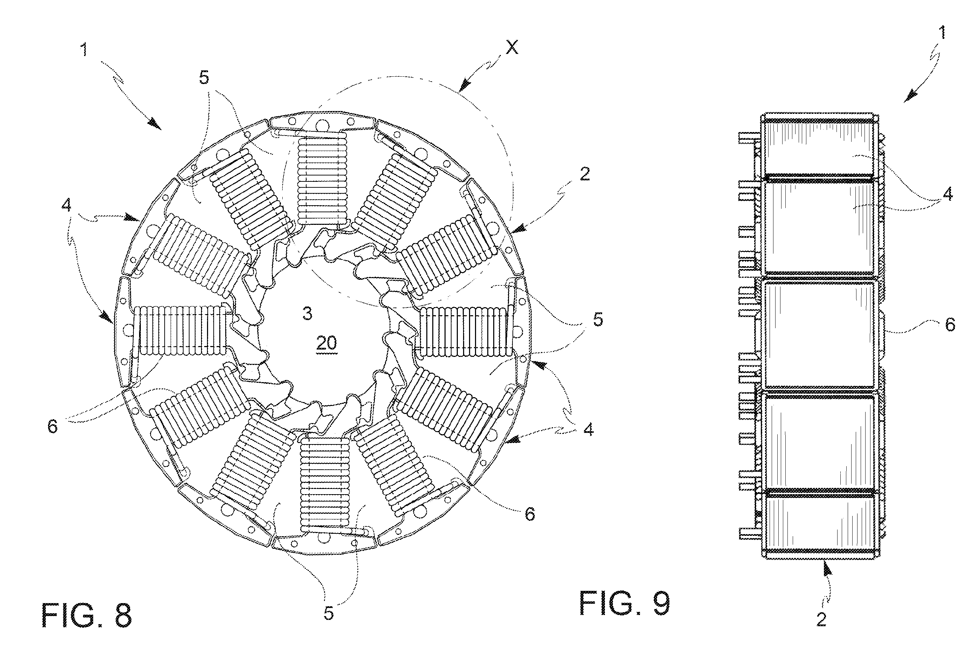

Each tooth 4 carries a respective winding 6, made of a length of an insulated electrical conductor wound around an intermediate shank portion thereof (please also refer to figures 8 and 9).

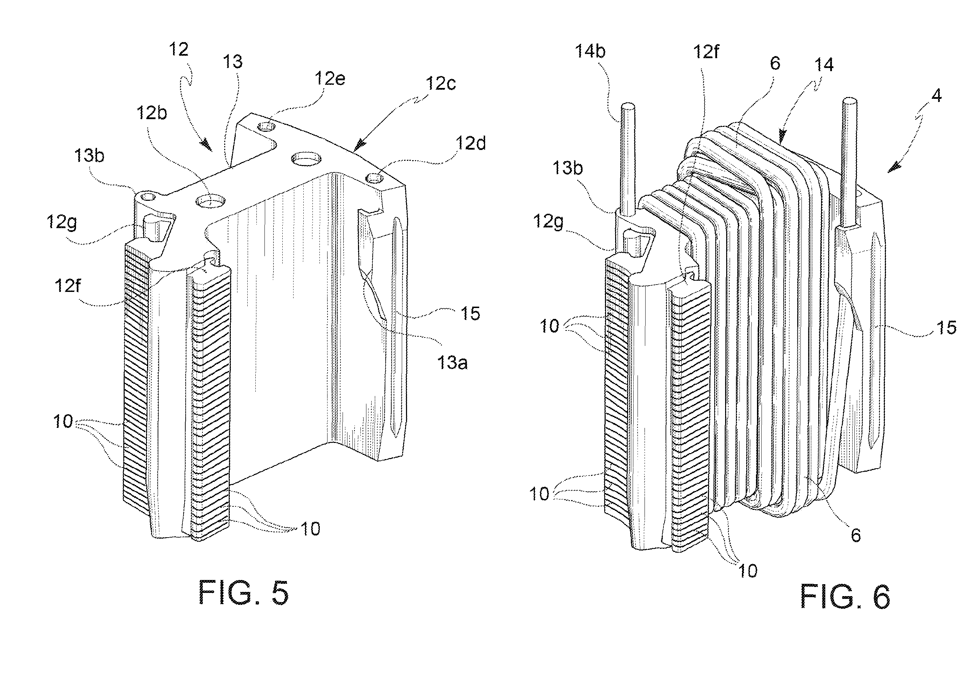

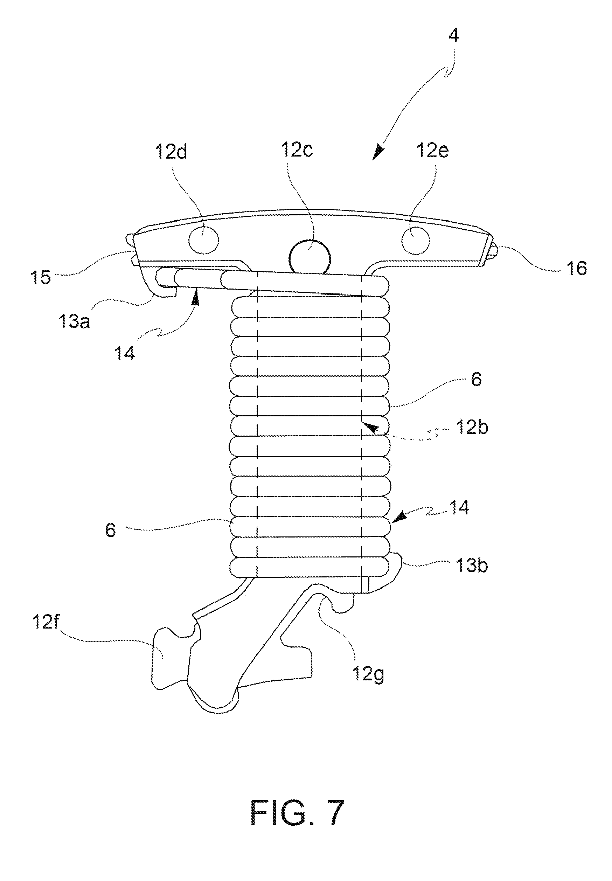

As it will appear more clearly from the following, in a stator according to the present invention the ferromagnetic structure 2 is formed of a plurality of separate tooth members or tooth assemblies, such as those shown in figures 6 and 7. In those figures a single tooth member or tooth assembly has been designated by reference numeral 4. Each tooth member or tooth assembly 4 is manufactured essentially as follows.

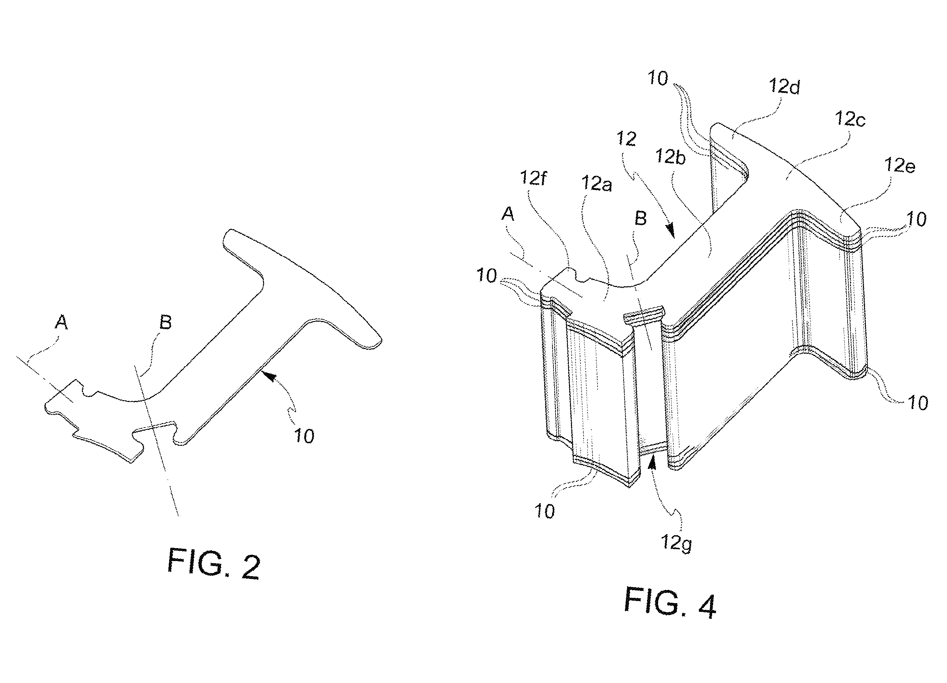

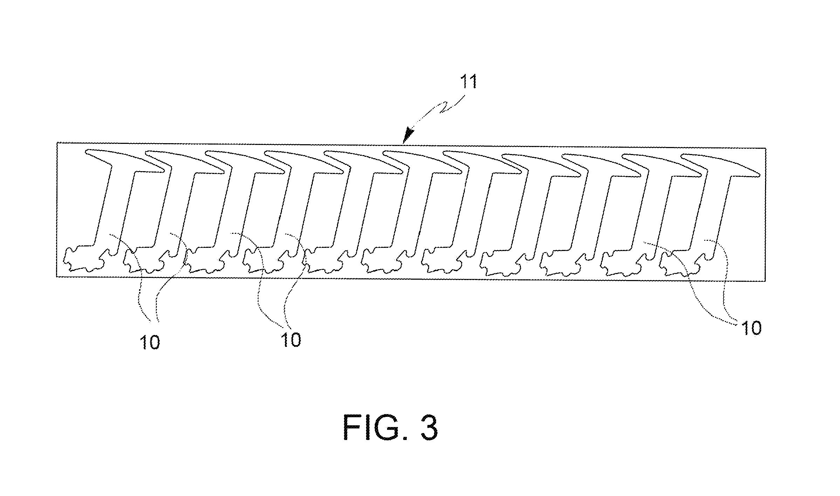

Referring to figures 2 and 3, a plurality of laminations 10 is obtained by punching from a sheet of ferromagnetic material (figure 3) according to a punching scheme such as that shown in figure 3. With such a punching scheme, the punching efficiency increases to above 50%.

A number of identical laminations 10 are assembled together, in a per se known manner, to form a stack designated 12 in figure 4. Such a stack 12 forms the core of a tooth member or tooth assembly 4.

Due to the peculiar shape of each lamination 10, a stack 12 of such laminations exhibits a root portion 12a, an intermediate shank portion 12b and a distal head portion 12c. The latter has two opposite side portions indicated 12d and 12e in figure 4.

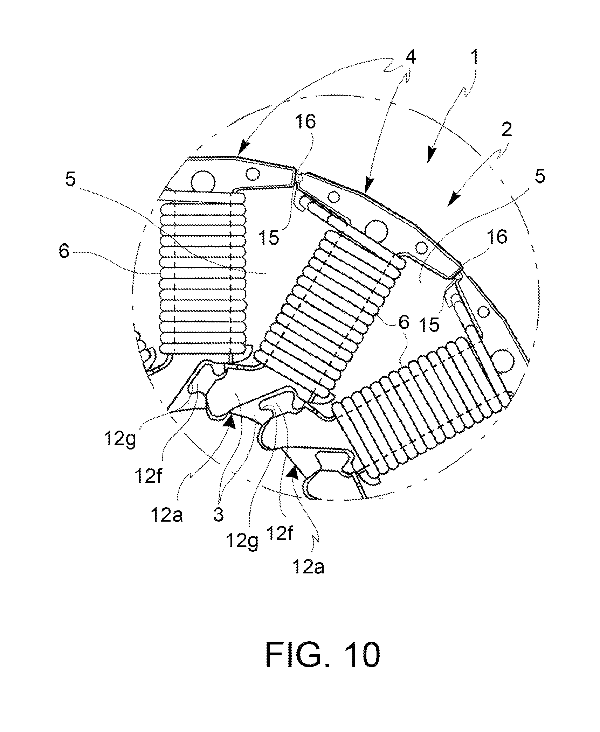

The laminations 10 are shaped such that in the root portion 12a of each stack 12 there are formed a first male coupling formation 12f, and a recessed, female coupling formation 12g. The contour of the male formation 12f of each stack corresponds to the profile of the female formation 12g, such that the male formation 12f of one stack 12 is adapted to be matingly engaged into the female formation 12g of an adjacent stack 12, as shown for instance in figures 8 and 10, and as it will be more clearly explained later.

Referring to figure 4, the axes A and B of the formations 12f and 12g, respectively, extend at an angle of 360°/N, where N is the number of tooth members of the stator 1.

In the embodiment illustrated in the drawings, the stator 1 has N=12 teeth 4, and thus the angle between the axes A and B of the mating formations 12f and 12g of each tooth member 4 is equal to 360°/12=30°.

As it is shown in figure 5, each stack 12 of laminations 10 is provided with an extensive electrically-insulating coating 13, preferably made of an overmolded plastic material. The coating 13 covers most of the surfaces of each stack 12 of laminations, only the coupling formations 12f and 12g and the peripheral surface of the head portion 12c of the stack remaining uncovered.

As shown in figure 6, a length of an insulated electrical conductor 14 is wound around the coated shank portion 12b of the coated stack 12 of laminations, to form the winding 6.

Advantageously, integrally with the coating 13 of each stack of laminations, along the end side of the portion 12d of the stack, there is formed a retaining projection 13a (figures 5 and 6) for retaining one end 14a of the insulated conductor 14.

The other end 14b of said conductor is conveniently engaged through an opening of a projecting appendix 13b, integrally made with the coating 13 of the stack, as shown in figures 5 and 6.

As it appears in particular in figure 7, in the opposite end sides of the head portion 12c of each tooth member or assembly 4, there are formed a groove 15 and a corresponding projection 16, having complementary shapes.

As shown in figures 8 and 10, in the assembled condition of the stator 1, the projection 16 of one tooth member 4 engages into the groove 15 of an adjacent tooth member 4.

The grooves 15 and the corresponding projections 16 are sized such that the tooth members 4 are assembled together with a slight interference fit, so as to ensure that the tooth members 4 are tightly interconnected with each other.

After assembling the tooth members 4 together, to obtain the annular stator 1 of figure 8, an approximately circular aperture 20 is defined by the interconnected root portions 12a thereof, said aperture 20 being adapted to receive a shaft member (not shown).

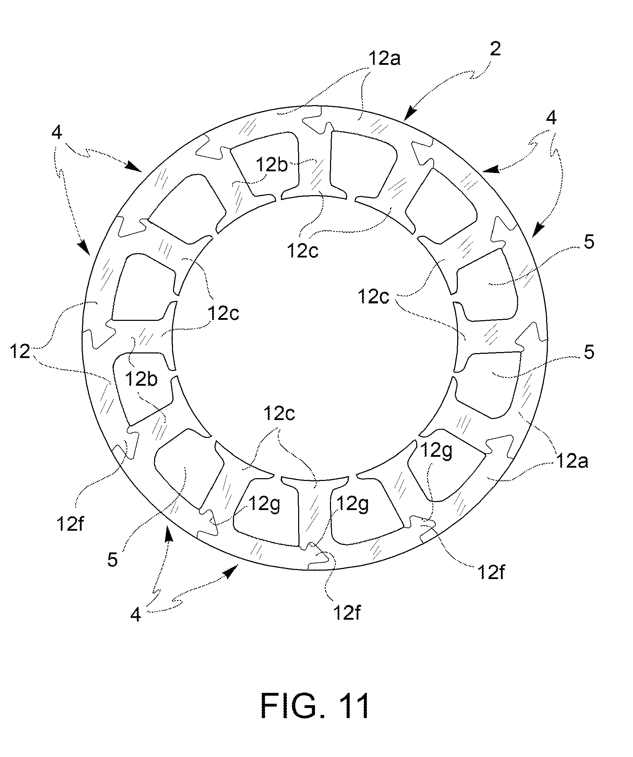

In figure 11 there is shown the ferromagnetic structure 2 of another armature according to the present invention, wherein the tooth members have radially inner head portions 12c and radially outer root portions 12a. The armature of figure 11 is intended for use in cooperation with a radially internal rotor.

The preceding description, mutatis mutandis, also applies to the armature of figure 11.

An armature according to the present invention has a number of advantages.

First of all, as already mentioned above, the punching efficiency of the tooth laminations 10 is much better than the punching efficiency of the conventional laminations.

Furthermore, in an armature according to the present invention the energy losses due to parasitic or eddy currents are much lower.

Another important advantage of the invention is that the provision of a respective winding on each single tooth member, before the tooth members are assembled to each other, can be accomplished much more easily and with less constraints on the wire section, the turn number and the winding connection (star or delta).

Obviously, without modifying the principle of the invention, the embodiments and the constructional details may be widely varied with respect to what has been described and illustrated purely by way of a non-limiting example, without thereby departing from the scope of the invention as defined in the accompanying claims.

Although in the preceding description and in the annexed drawings reference has primarily been made to an armature including an annular portion with a plurality of outwardly projecting radial teeth, the invention is applicable as well to an armature wherein the teeth project radially inwardly from a peripheral annular portion of the ferromagnetic structure, as briefly described in connection with figure 11.

## Claims

1. An armature (1) for an electric d.c. machine, in particular a stator (1) for a d.c. brushless motor, comprising
a ferromagnetic structure (2) made of stacked laminations (10) and including an annular portion (3) and a plurality of angularly spaced, essentially radial teeth (4) which project from said annular portion (3), whereby a corresponding plurality of slots (5) is defined therebetween, each tooth (4) carrying a respective winding (6);
said ferromagnetic structure (2) being formed of a plurality of separate tooth members (4), each comprising a respective stack (12) of laminations (10) and having a root portion (12a), an intermediate shank portion (12b) carrying the respective winding (6), and a distal head portion (12c);
said tooth members (4) being mechanically interconnected and magnetically coupled with each other through respective mating formations (12f, 12g) of their root portions (12a), whereby the interconnected root portions (12a) of the tooth members (4) form the said annular portion (3) of the ferromagnetic structure (2).

2. An armature according to claim 1, comprising N angularly equispaced tooth members (4), wherein the root portion (12a) of each tooth member (4) has a first, male-type formation (12f) and a second, female-type formation (12g) which have essentially complementary shapes, and which are angularly shifted by an angle equal to 360/N degrees.

3. An armature according to claim 1 or 2, wherein the stack (12) of laminations (10) of each tooth member (4) is provided with an electrically insulating coating (3) leaving at least the said coupling formations (12f, 12g) uncovered.

4. An armature according to claim 3, wherein said coating (3) is made by overmoulding a plastic material onto the stack (12) of laminations (10).

5. An armature according to claim 4, wherein in each tooth member (4) the overmolded plastic material (13) also forms retaining means (13a, 13b) for corresponding ends (14a, 14b) of the winding (6).

6. An armature according to claim 3 or 4, wherein in each tooth member (4) the overmolded plastic material (13) also forms further coupling formations (15, 16) at opposite ends of the head portion (12c), whereby in the assembly of the armature (1) the head portions (12c) of the tooth members (4) are mutually coupled with an interference fit.

7. A method for the manufacture of an armature (1) for an electric d.c. machine, in particular a stator (1) for a d.c. brushless motor, comprising the steps of
preparing a plurality of separate tooth members (4), each comprising a respective stack (12) of ferromagnetic laminations (10) and having a root portion (12a), an intermediate shank portion (12b) and a distal head portion (12c); the root portion (12a) being provided with opposite lateral coupling formations (12f, 12g);
winding a length of an insulated electrical conductor around the shank portion (12b) of each tooth member (4), to form a respective winding (6) thereon; and
mechanically interconnecting the root portions (12a) of said tooth members (4) by mutually coupling the formations (12f, 12g) of their root portions (12a) so as to form a ferromagnetic structure (2) including an essentially annular portion (3), which is formed by the interconnected root portions (12a) of the said tooth members (4) and from which the shank portions (12b) of the tooth members (4) project radially, defining a corresponding plurality of slots (5) therebetween.
